# EUROPEAN PATENT APPLICATION

(11) **EP 4 557 124 A1**
(43) Date of publication of application: **21.05.2025**
(21) Application number: 24205835.2
(22) Date of filing: 10.10.2024
(51) Int. Cl.: G06F 16/3329

(54) **METHOD AND SYSTEM FOR INTRODUCING INTELLIGENT DIALOGUE**

(30) Priority: 14.11.2023 TW 112143768
(71) Applicant: Playsee Inc., KY1 -1208 West Bay Grand Cayman (KY)
(72) Inventor: LI, Yu-Hsien, 116 Taipei City (TW); LIN, Chen-Chou, Taipei (TW); LIN, Wen-Shiang, 247 New Taipei City (TW); LEE, Max Hen-Shau, 115603 Taipei City (TW)
(74) Representative: Durán-Corretjer, S.L.P.

(57) **Abstract**

A method and a system for introducing an intelligent dialogue are provided. The system provides a cloud server (100) that uses a processing circuit to perform the method. In the method, an online dialogue procedure is initiated, and a first chatbot is introduced. The first chatbot receives a user-input content via a dialogue interface (115), and semantic features of the user-input content, user data, and real-time environmental information obtained from an external system can be extracted. According to such information, a second chatbot of a specific domain can be introduced into the dialogue interface (115). A natural language model and a generative artificial intelligence technology operated in the second chatbot generate a dialogue content that matches the semantic features, a user preference, and the real-time environmental information. The dialogue content is outputted via the dialogue interface (115).

## Description

### FIELD OF THE DISCLOSURE

The present invention relates to a chatbot, and more particularly to a method and a system for introducing intelligent dialogue that can rely on semantics of a dialogue content to dynamically introduce a domain-specific chatbot.

### BACKGROUND OF THE DISCLOSURE

Artificial intelligence (AI) has rapidly developed in various fields, with one area of the artificial intelligence being natural language chatbots that are able to process natural languages and automatically generate content. The chatbot is, for example, a chat generative pre-trained transformer (ChatGPT) developed by OpenAI. Such a natural language chatbot utilizes a generative artificial intelligence technology to pre-train large amounts of data, and then to generate new data correlating with original data. An intelligent model is created after a deep-learning process (such as a generative adversarial network (GAN)).

Taking ChatGPT as an example, the natural language model is trained by learning large amounts of network data, and can chat with users by using the natural languages. However, responses to the users are usually standard answers generated through the learning process, and these responses are not adapted to the current status of the user in real time. Despite being a natural language chatbot, ChatGPT fails to provide contents correlating with the current status of the user.

Furthermore, other than the above-mentioned drawbacks, services provided by the present natural language chatbots are only for general discussions, and fail to satisfy the needs of all domains. Therefore, there is still much room for improvement. It should be noted that, for a specific domain, a domain-specific chatbot that is trained by data of the specific domain can be used for providing dialogue services of said domain. However, in the conventional technology, chatbots that can integrate various domains and effectively meet the requirements of enterprises and individuals are still not available.

### SUMMARY OF THE DISCLOSURE

In response to the above-referenced technical inadequacies of a conventional chatbot, the present invention provides a method and a system for introducing an intelligent dialogue. The system can dynamically introduce a domain-specific chatbot according to semantics of dialogue contents. A natural language processing (NLP) technology and a generative artificial intelligence (AI) technology are applied for implementing the chatbot. By referring to a user preference and real-time environmental information, dialogue contents generated by the chatbot can be consistent with personal requirements of a user and a real-time circumstance.

The system includes a cloud server that uses a processing circuit to perform the method for introducing the intelligent dialogue. In the method, an online dialogue procedure is initiated, and a first chatbot is introduced for receiving a user-input content via a dialogue interface. Then, semantic features of the user-input content are extracted, and user data and real-time environmental information are obtained. A second chatbot can be introduced according to one or any combination of the semantic features of the user-input content, the user preference retrieved from the user data, and the real-time environmental information. Afterwards, a natural language model operated in the domain chatbot is used to generate dialogue contents that are imported to the online dialogue procedure. The dialogue contents are then outputted via the dialogue interface.

These and other aspects of the present invention will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
Fig. 1 is a schematic diagram illustrating a framework of a system that operates a method for introducing an intelligent dialogue according to one embodiment of the present invention;
Fig. 2 is a schematic diagram depicting a data structure that is used for operating the method for introducing the intelligent dialogue according to one embodiment of the present invention;
Fig. 3 is a schematic diagram illustrating a multi-domain robot database according to one embodiment of the present invention;
Fig. 4 is a flowchart illustrating the method for introducing the intelligent dialogue according to one embodiment of the present invention;
Fig. 5 is a flowchart illustrating the method for introducing the intelligent dialogue according to another embodiment of the present invention;
Fig. 6 is a flowchart illustrating a process of creating a domain chatbot according to one embodiment of the present invention;
Fig. 7 is a flowchart illustrating a process of establishing a domain client report according to one embodiment of the present invention;
Fig. 8 to Fig. 12 are exemplary diagrams illustrating graphical user interfaces provided by a system for introducing the intelligent dialogue according to one embodiment of the present invention; and
Fig. 13 to Fig. 17 are schematic diagrams illustrating graphical user interfaces for introducing the domain chatbot according to certain embodiments of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention relates to a method and a system for introducing intelligent dialogue. The method for introducing the intelligent dialogue can be operated in a cloud server. The cloud server operates a natural language processing (NLP) technology for providing an intelligent dialogue service. The cloud server also provides a social media via a network, and invites users to join the social media for sharing texts, pictures, and audiovisual contents. The cloud server provides chatbots in various domains, and allows the users to chat through services provided by the cloud server. The cloud server employs artificial intelligence technologies (such as a machine learning algorithms and the NLP technology) to learn data in various fields, so as to train the chatbots for providing chatting services. The cloud server also obtains a user preference by learning activity data generated in the social media of the user. In this way, the chatbot can use chatting semantics of the user, the user preference, and real-time environmental information to generate dialogue contents that are consistent with personal requirements of the user and current environmental features.

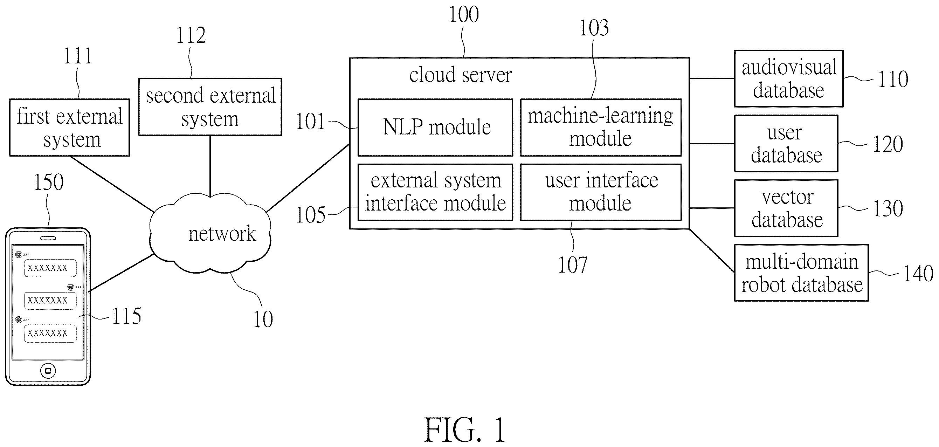

Regarding the system implemented by the cloud server, reference can be made to Fig. 1, which is a schematic diagram illustrating a framework of the system that operates the method for introducing the intelligent dialogue according to one embodiment of the present invention.

The diagram shows a cloud server 100 that is implemented by a computer system, a database, and a network, and various functional modules are implemented through collaboration of software and hardware. As shown in the diagram, a natural language processing (NLP) module 101 that is used to perform natural language processing is provided. The NLP module 101 embodies a chatbot that is capable of processing natural languages. A machine-learning module 103 is used to operate a machine-learning algorithm for training a natural language model and learning network activities of the user by a deep-learning method, so as to establish the user preference. Accordingly, the chatbot can generate the dialogue contents that are consistent with the user preference. The cloud server 100 provides an external system interface module 105, and the external system interface module 105 includes a circuitry and related software that connect with an external system (e.g., a first external system 111 and a second external system 112) via a network (e.g., a network 10) and retrieve data via an application program interface (API). The cloud server 100 provides a user interface module 107, so as to allow a user device 150 to connect with the cloud server 100 by a network connection function of the user interface module 107. The cloud server 100 operates a web server for providing network services, such that an application program (e.g., a social media application) executed in the user device 150 can obtain a corresponding service provided by the cloud server 100.

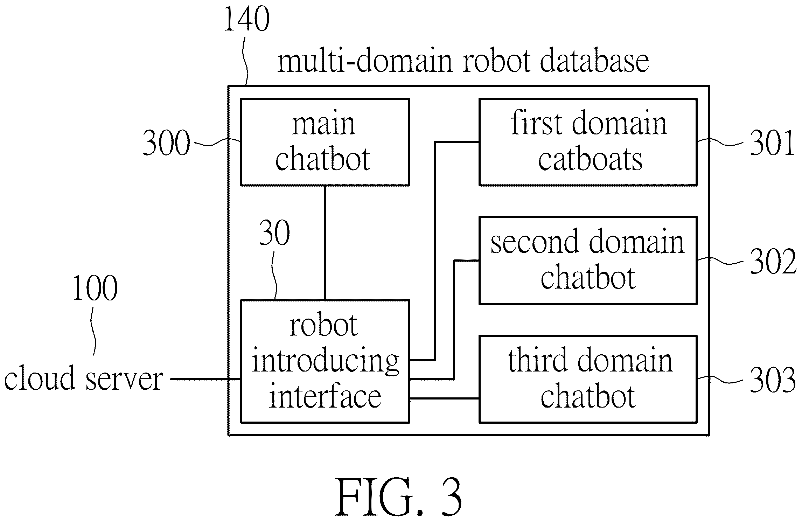

According to the system framework shown in the diagram, the cloud server 100 includes a built-in or an external database (such as an audiovisual database 110), and provides data services. For example, the user device 150 is allowed to access the audiovisual contents shared by other users and stored in the audiovisual database 110 via the network 10. The database also includes texts and pictures shared by other users. The cloud server 100 includes a user database 120 that is used to store user data, and the user data includes user personal data, uploaded texts, pictures, and audiovisual contents, and activity data relating to the network services provided by the cloud server 100. The activity data records the network activities of the user, such as browsed contents, follows, likes, shares, and subscriptions. The activity data forms a user profile. Furthermore, the user database 120 stores and updates the user data in accordance with a time dimension when the dialogue contents are continuously produced over time. The user database 120 also records historical dialogue records of the user, which become dialogue records to be learned by the machine-learning algorithm in the natural language model. The cloud server 100 includes a vector database 130, and the vector database 130 is used to record structured data that is formed by performing a vector operation on the various texts, pictures, and audiovisual contents. The structured data is used for comparison, so as to obtain personalized data that match the user. The data provided by the system operating the method for introducing the intelligent dialogue also includes a multi-domain robot database 140, in which domain robots of various domains are included (as shown in Fig. 3).

When a domain model is introduced to the method for introducing the intelligent dialogue, the system can determine one domain chatbot that corresponds to the requirement of the user according to semantic features of the dialogue contents inputted by the user. In an exemplary example, when the user chats about his need about sports, the dialogue contents are processed by the NLP module 101, and sports-related semantics are obtained. The system then imports a sports-specific domain chatbot from the multi-domain robot database 140, and the user can chat with the sports-specific domain chatbot for obtaining information about sports. Accordingly, the system can provide better dialogue services in various domains.

According to the schematic diagram of the system framework shown in the diagram, the cloud server 100 retrieves data from the external system via the network 10 or a connection under a specific protocol. The external system is exemplified as the first external system 111 and the second external system 112. For example, the external system is a server set up by a government or an enterprise for providing open data. The cloud server 100 uses the external system interface module 105 to retrieve real-time data that meets a specific requirement via an application program interface (API) provided by each external system. The real-time data can be real-time weather, real-time traffic, real-time news, network information relating to a present location, etc.

The user device 150 executes an application program provided by the cloud server 100. For example, the cloud server 100 provides a social media service, and the user device 150 executes a corresponding social media application program that accesses the social media service via the user interface module 107 of the cloud server 100. In particular, the cloud server 100 uses the natural language processing module 101 to provide a natural language chatbot, and the users can chat with the chatbot via the dialogue interface 115. On the other hand, the cloud server 100 learns the activity data to be generated when the user accesses the various services provided by the cloud server 100 through the machine-learning module 103. The activity data is, for example, data to be generated when the user manipulates the social media application program and the dialogue interface 115. The machine-learning module 103 can learn interest features of the user, so as to establish the user data.

It is worth mentioning that the texts, the pictures, and the audiovisual contents retrieved by the cloud server 100 are not structured data, and can be converted to vectorized data by way of encoding, so as to easily acquire the meaning and facilitate data searching. Further, the vectorized data can be used to compare with a search keyword provided by the user. For example, a distance function is used to calculate a distance between the search keyword and the vectorized data stored in a database. The closer the distance is, the more relevant the data is. Therefore, the user can search data through the vector database 130. Similarly, the system can automatically import one corresponding domain chatbot according to the semantics of keywords extracted from dialogues of the user.

In one of the embodiments, the vector database 130 of the cloud server 100 supports multi-mode search services for texts and images, and provides structured information. For example, the various texts, pictures, and audiovisual content are textified, and the vector operation is performed on the textified contents for obtaining the vectorized data. The vectorized data can be used in a search service. The vectorized data can be used in a natural language processing process. The natural language processing process uses the natural language model to map the vectorized data to a vector space. Taking words and phrases inputted by the user as an example, the vector operation is performed on the words and the phrases, so as to obtain word vectors.

In one embodiment of the present invention, the method for introducing the intelligent dialogue can be implemented as multi-domain chatbots operated in the cloud server 100. The chatbot can use natural language to chat with the users in texts and voices. In addition to responding to messages inputted by the user, the cloud server can detect personality and habits of the user by retrieving the user data via the cloud server 100 before chatting. Further, the cloud server can also acquire a real-time status from the external system (e.g., the first external system 111 or the second external system 112). For example, the cloud server obtains the local weather and news according to the location of the user, such that the response to the user is not only based on the user preference, but also reflects an actual status.

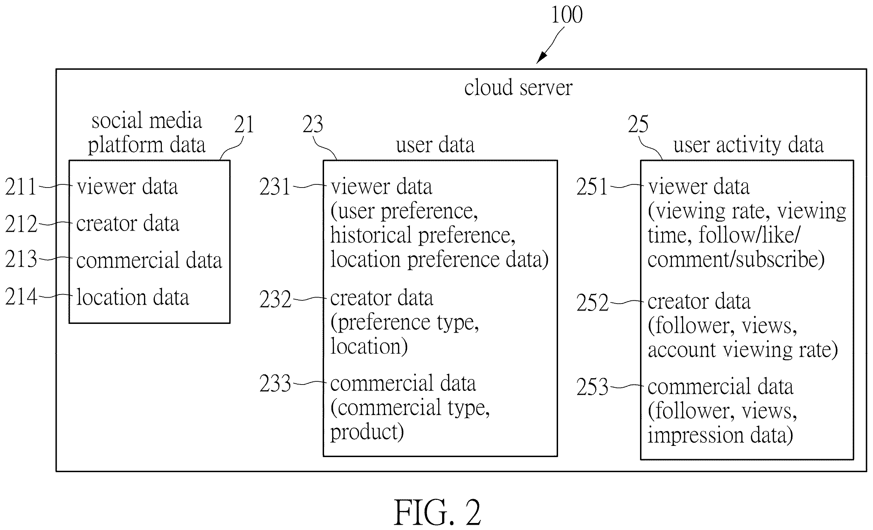

The chatting service provided by the system can be one of the functions operated in the social media. The user activity in the social media can serve as the data for the system to learn the user preference. The user activity data also forms structured data in the system. Reference is made to Fig. 2, which is a schematic diagram illustrating a data structure for operating the method for introducing the intelligent dialogue according to one embodiment of the present invention. The data can be divided into social media platform data 21, user data 23, and user activity data 25.

The social media platform data 21 is non-public data in the system. The system operating the method for introducing the intelligent dialogue retrieves viewer data 211 (data of the users accessing various contents provided by the cloud server), creator data 212 that the system provides about creators of the various contents, and business data 213 that the system provides for enterprises to create enterprise data for advertising purposes. Further, the system provides location-based services, and thus can obtain location data 214 that is related to geographical locations.

The user data 23 is public data in the system. The user data 23 includes data edited by the user himself. The user data 23 also includes viewer data 231 retrieved from the various user activity data. The viewer data 231 includes interest data of the users who act as viewers, and the interest data is obtained by the system through a machine-learning method. The interest data includes recent interest data, historical interest data, and location-related interest data.

Creator data 232 of the user data 23 is data relating to the users who act as creators. The creator data 232 includes preference types and location-related data of the creators learned by the system through the machine-learning method. For example, the creator data 232 includes the data of the users who act as creators and interested types and locations of creators learned through the machine-learning method. The interested locations of the creators include geographical locations or specific locations within a place.

When the user is an enterprise, commercial data 233 of the user data 23 includes an enterprise commercial type and product features thereof that are obtained by the system through a machine-learning process.

The user activity data 25 is non-public data in the system. The user activity data 25 includes statistical data of activities in various services provided by the cloud server. The user activity data 25 also includes data obtained through the machine-learning process. The user activity data 25 mainly includes viewer data 251, creator data 252, and commercial data 253.

The viewer data 251 of the user activity data 25 includes viewing rates, viewing times, and activity data (such as follows, likes, comments, and subscriptions) when the users use the services provided by the cloud server. The creator data 252 of the user activity data 25 includes statistical data of the users who act as creators. The statistical data includes a quantity of followers of channels or accounts, views of the created contents, and account viewing rates. The commercial data 253 includes a quantity of followers, content views, and overall impression data obtained when the user is an enterprise.

The social media platform data 21, the user data 23, and the user activity data 25 are obtained by the cloud server that collects and learns data. The social media platform data 21, the user data 23, and the user activity data 25 form a basis for the system to operate the natural language processing and a generative artificial intelligence technology, so as to implement the chatting service. The cloud server uses a processing circuit to process the above data for implementing a chatbot that can meet the requirements of personalization and instantaneousness.

Under the data structure operated in the method for introducing the intelligent dialogue (as shown in Fig. 2), the user can be an enterprise that provides commercial services or products, a specific organization, or an individual. The system can use the business data 213 of the social media platform data 21 to train the domain chatbot in a specific domain, so that the enterprise, the organization, or the individual can conduct business promotion. In one further embodiment of the present invention, the system for introducing the intelligent dialogue can use the data in various professional domains to train the domain robots, so that professional dialogue contents of various domains can be provided according to user requirements.

Reference is made to Fig. 3, which is a schematic diagram illustrating a multi-domain robot database according to one embodiment of the present invention. The multi-domain robot database 140 shown in the diagram can be an external or internal database of the cloud server 100. The multi-domain robot database 140 provides multiple chatbots, which include a main chatbot 300. The main chatbot 300 provides a general chatting service for users, and can be a default chatbot at the beginning of a chat. The natural language processing technology operated in the main chatbot 300 analyzes the natural language dialogues to obtain semantic features of the users, and real-time environmental information is further referred to for determining whether or not any domain-specific chatbot needs to be introduced.

The diagram schematically shows the multi-domain robot database 140 that provides multiple domain chatbots (such as a first domain chatbot 301, a second domain chatbot 302, and a third domain chatbot 303) that are trained by learning data in various domains. The chatbots of different domains can also be integrated into one chatbot of another domain when the system is in operation. In an exemplary example, a sport domain robot has a dialogue capability for various specialized sports. The system also provides a domain chatbot that is trained for a specific sport. In response to the requirement of the user, the system can train the domain chatbot to be consistent with said requirement. Such chatbot can assist the user to provide dialogue services for promoting a specific product.

The multi-domain robot database 140 incorporates a robot introducing interface 30 for interfacing with the cloud server 100. One of the domain chatbots can be chosen according to an instruction generated by the cloud server 100, and then the chosen domain chatbot can be introduced to the cloud server 100 via the robot introducing interface 30.

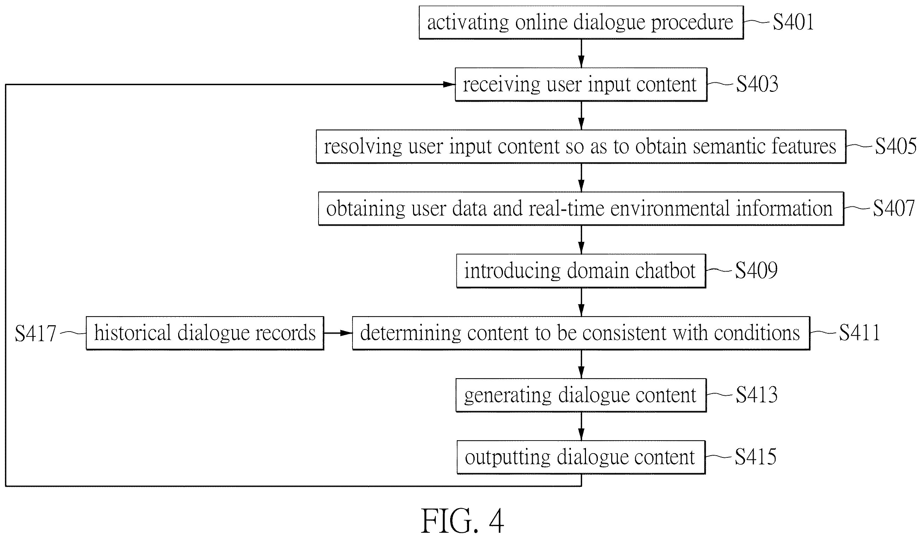

In one embodiment of the present invention, the natural language model operated in the cloud server performs the vector operation on the content inputted by the user (via the dialogue interface), the user preference, and the real-time environmental information, annotates the texts, calculates a vector of each of the words, and queries a database for retrieving correlated contents based on vector distances between the words. Accordingly, the dialogue contents that are consistent with the user preference and the real-time environmental information can be obtained. In an online dialogue procedure, a transformer model is used to conduct machine translation, document summarization, and document generation on textified data. Reference is made to Fig. 4, in which a process of obtaining semantics of a user-input content in the dialogue interface is illustrated, and the chatbot (such as one of the main chatbot 300, the first domain chatbot 301, the second domain chatbot 302, and the third domain chatbot 303 shown in Fig. 3) is enabled to generate the dialogue contents.

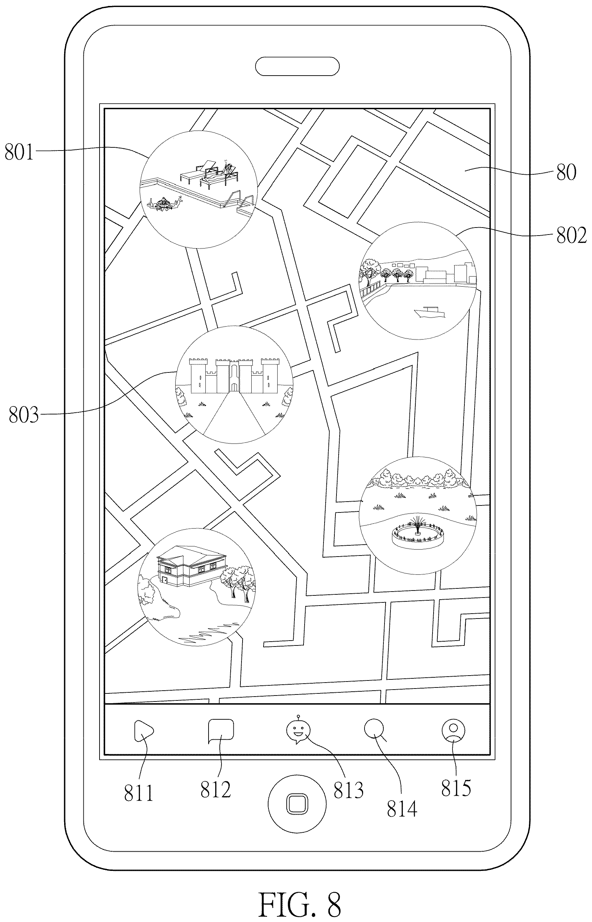

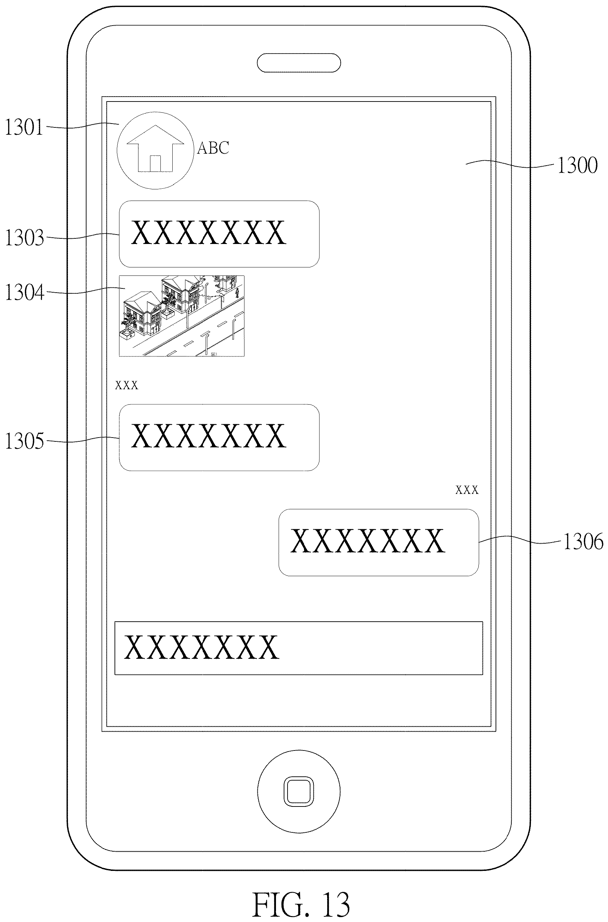

The system that applies a framework of the cloud server performs the method for introducing the intelligent dialogue, and reference can be made to flowcharts shown in Fig. 4 to Fig. 7. Reference can also be made to Fig. 8 to Fig. 12 that are exemplary examples of graphical user interfaces provided by the system, and to Fig. 13 to Fig. 17 that show graphical user interfaces for importing a corresponding domain chatbot. It should be noted that the above exemplary examples are not intended to limit operations of the method of the present invention.

In the flowchart shown in Fig. 4, at the beginning, the user uses an application executed in the user device to connect with the cloud server, and uses the services such as browsing the contents. The cloud server provides a graphical user interface for the users to browse texts, pictures, and audiovisual contents (via the user interface module 107 shown in Fig. 1). The graphical user interface refers to a map interface 80 shown in Fig. 8, in which an electronic map that is initiated by executing an application in the user device is used as a background. Geographic information correlated to each of the audiovisual contents is represented by a linking icon marked on the map interface 80, such as the linking points correlating to multiple geographical locations shown on the map interface 80. For example, the linking points can include one or more audiovisual linking points that are exemplarily represented by audiovisual linking points 801, 802, and 803. According to one of the embodiments of the present invention, the audiovisual linking points marked on the map interface 80 can include one or more audiovisual contents that are recommended by the system for being related to points of interest within a specific geographical range.

According to one embodiment of the present invention, as shown in Fig. 8, the user device at a user end executes a corresponding social media application. When the contents displayed on a page (such as the map interface 80) are browsed, some linking icons (such as "playback 811", "dialogue 812", "helper 813", "search 814", and "user main page 815") are shown at a bottom position. The user can touch or use a specific gesture to actuate the dialogue-linking icon "dialogue 812" or any linking point marked at a specific place on the map interface 80, so as to activate the online dialogue procedure (step S401).

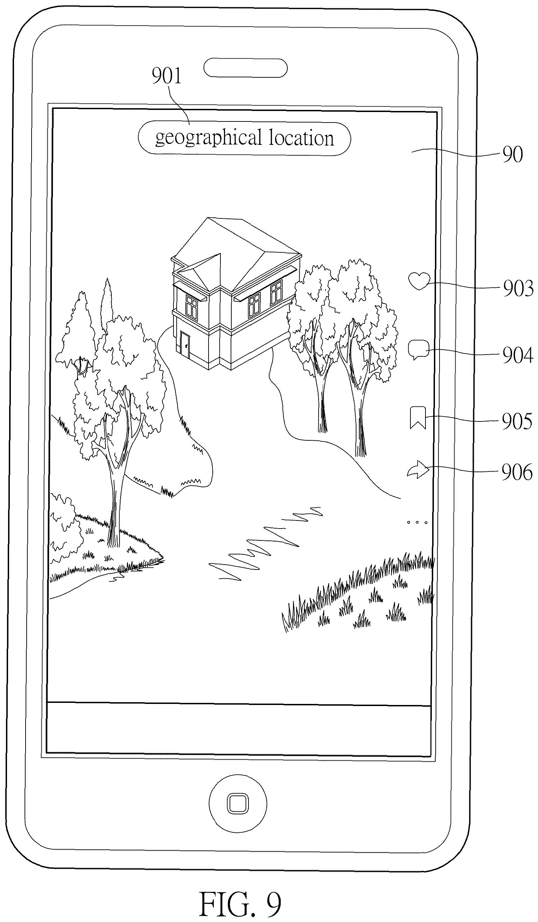

On the other hand, Fig. 9 is another schematic diagram depicting a linking method for activating the online dialogue procedure according to one embodiment of the present invention. When the user selects any of the audiovisual linking points (801, 802, or 803) shown on the map interface 80, an audiovisual playback page 90 shown in Fig. 9 is then initiated. The audiovisual playback page 90 is used to play a video shared or produced by a user. The diagram also shows a geographical location 901 correlated with the video. A sidebar shows several linking icons, such as "like 903", "dialogue 904", "collect 905", and "share 906." The online dialogue procedure is initiated when the user actuates a dialogue-linking icon "dialogue 904" (step S401).

After that, the dialogue interface is initiated and provided for the user to input texts, pictures, or a specific audiovisual content. For example, the user can share a link to the audiovisual content. The cloud server then uses a user interface module to receive the user-input content (step S403). In certain embodiments, the online dialogue procedure embodies the chatbots that operate the natural language model. For example, as shown in Fig. 3, the default main chatbot 300 is imported from the multi-domain robot database 140 at the beginning. The main chatbot 300 can chat with the user via the dialogue interface, receive the dialogue contents inputted by the user, and perform the natural language processing on the content inputted by the user each time.

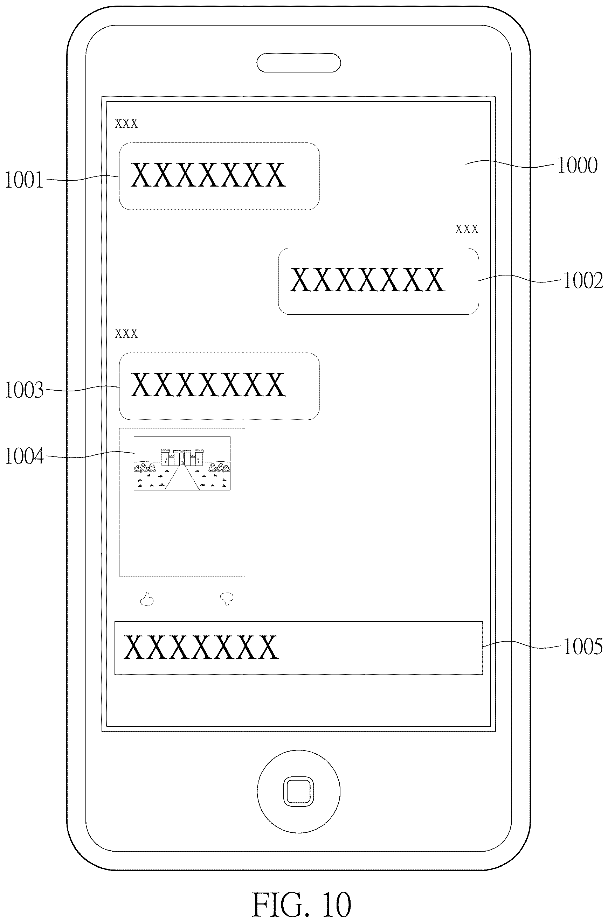

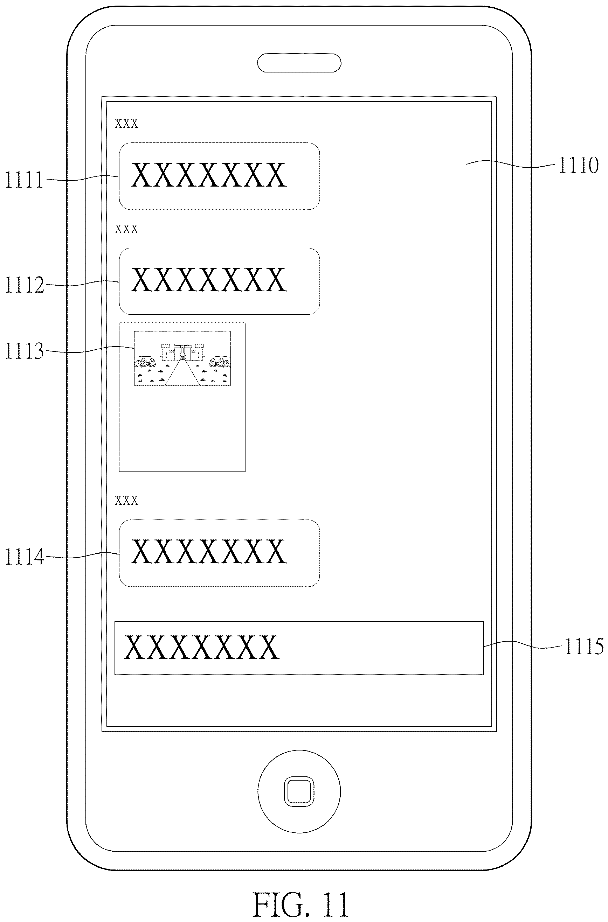

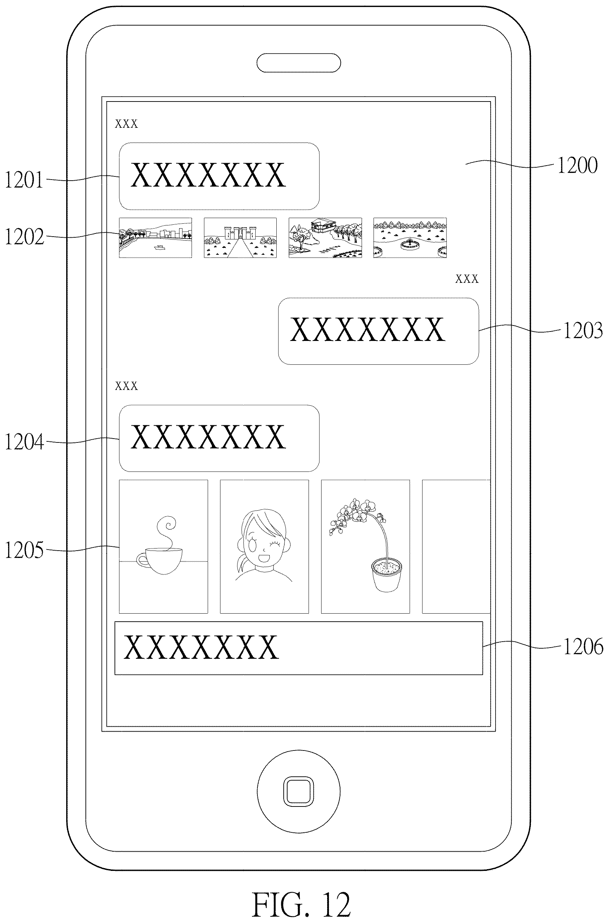

As for examples of the dialogue interface, reference can be made to a dialogue interface 1000 shown in Fig. 10, a dialogue interface 1110 shown in Fig. 11, and a dialogue interface 1200 shown in Fig. 12. Each of the examples of the dialogue interface provides an input field for the user to input contents and a dialogue display area that is used to display the dialogue contents outputted by the chatbot and the user-input content.

In the meantime, the cloud server uses the user interface module to retrieve the user-input content. The content retrieved via the dialogue interface can be texts, voices, or audiovisual contents. When the contents to be retrieved are the voices or the audiovisual contents, the contents can be textified through a textification process, so as to be converted into texts. The texts are then processed by the NLP module for extraction of the semantic features (step S405). In the above process, the cloud server retrieves the user data from a user database and the real-time environmental information from an external system, such as via the external system interface module 105 shown in Fig. 1 (step S407).

While the user is chating with the chatbot, a software process used to perform the method for introducing the intelligent dialogue in the cloud server determines in real time whether or not to import any domain chatbot according to any or any combination of the semantic features of the dialogue contents, the user preference, and the real-time environmental information. When one of the domain chatbots is determined to be imported to the online dialogue procedure (step S409), a content that is in compliance with the semantic features of the user-input content, the user preference obtained from the user data, and the real-time environmental information can be obtained by querying a database (step S411). In the online dialogue procedure, the natural language model operated in the domain chatbot can generate the dialogue contents (step S413). Afterwards, the dialogue contents are then introduced to the online dialogue procedure and outputted via the dialogue interface (step S415). The above step S403 to step S415 are repeated for accomplishing the method.

Further, the natural language model operated in the cloud server uses the database or a system memory to record information of various dimensions, which includes historical dialogue records in the same online dialogue procedure. In addition to considering the semantic features of the dialogue contents inputted by the user, the user preference, and the real-time environmental information (e.g., step S411 of Fig. 4), the system also refers to the historical dialogue records in the current online dialogue procedure for the chatbot to generate dialogue contents (step S417). Therefore, the dialogue contents generated by the natural language model (step S411) can be consistent with the current situation.

It should be noted that, the historical dialogue records in the same online dialogue procedure can often be used to extract the current situation, and can thus reflect the current emotion and requirement of the user. As shown in Fig. 1, the natural language processing module 101 of the cloud server 100 uses the natural language model to consider the semantics of the user, the user preference, the real-time environmental information, and the historical dialogue records at the same time. Accordingly, when the dialogue contents are generated, the situation of the dialogue contents can remain the same. For example, the same dialogue topic can be continued. In addition, when the natural language model is used to generate the dialogue contents, terms that can reflect emotions (such as joy, anger, sadness, and happiness) of the user in the dialogue contents can be the same as those in the previous dialogue contents. Therefore, the chatbot can rely on the historical dialogue records to learn ways that emotions are expressed by the user.

Referring to Fig. 10, the dialogue interface 1000 shows several dialogue contents 1001, 1002, and 1003 that are generated between the user and the chatbot. The chatbot can rely on the semantic features extracted from the dialogue content 1002 to query the database, so as to provide a recommended audiovisual content 1004. An input field 1005 is provided at a bottom position of the dialogue interface 1000 for the user to input further dialogue contents.

In one further example, reference is made to the dialogue interface 1110 shown in Fig. 11. When an online dialogue procedure is initiated, the system can directly provide natural language dialogue contents 1111, 1112, and 1114 and a recommended audiovisual content 1113 based on the user preference and the real-time information. The user can then respond to these dialogue contents (e.g., 1111, 1112, 1113, and 1114) via the input field 1115 in the dialogue interface 1110.

According to one further embodiment of the present invention, the dialogue contents generated by the natural language model operated in the chatbot according to the semantic features of the user-input content, the user preference, and the real-time environmental information include multiple recommendation options, multiple recommended audiovisual contents, and/or links to multiple recommended friends. Reference is made to the exemplary example shown in Fig. 12.

In the online dialogue procedure, the dialogue interface 1200 shown in Fig. 12 has a dialogue content 1201 that is generated by the chatbot based on the semantic features. Further, when the software process of the system for processing natural language dialogues determines that the semantic features of the dialogue contents are directed to a specific domain, the system can import a corresponding domain chatbot from the multi-domain robot database, and the domain chatbot starts to chat with the user and provide information relating to the domain until the system determines that the main chatbot returns to the dialogue interface or another domain chatbot is imported. In the subsequent dialogues, the chatbot determines that the user is making a specific decision based on the semantics, and thus provides several recommendation options 1202. In particular, the chatbot can rely on the real-time environmental information obtained from an external system to provide recommendation options to the user. The chatbot can provide the recommendation options 1202 based on the real-time weather, the real-time traffic, time, and the current location of the user. For example, if the time happens to be a meal time, the chatbot provides meal options provided by some nearby restaurants that are open for business based on dietary habits of the user.

Similarly, if the user expresses his wish to watch an audiovisual content, the chatbot can provide multiple recommended audiovisual contents through the recommendation options 1202. If the chatbot determines that the user intends to find friends with similar interests, the recommendation options 1202 can be links to multiple recommended friends.

Further, the user uses the input field 1206 to respond to the above recommendation options 1202 by inputting a dialogue content 1203. As such, the chatbot can rely on the semantics of the dialogue content 1203 to provide a dialogue content 1204, and multiple recommended contents 1205 can be further provided based on the semantics of the above dialogue contents. In continuance to the above example, when the user responds that he desires to choose one of the meals, the chatbot firstly acquires real-time weather and traffic from an external system and the current location of the user, and then provides restaurant options having the chosen meal. Furthermore, if it is determined that the weather is bad and there is a traffic jam on the road, the chatbot will correspondingly recommend other restaurant options that are easily accessible for the user.

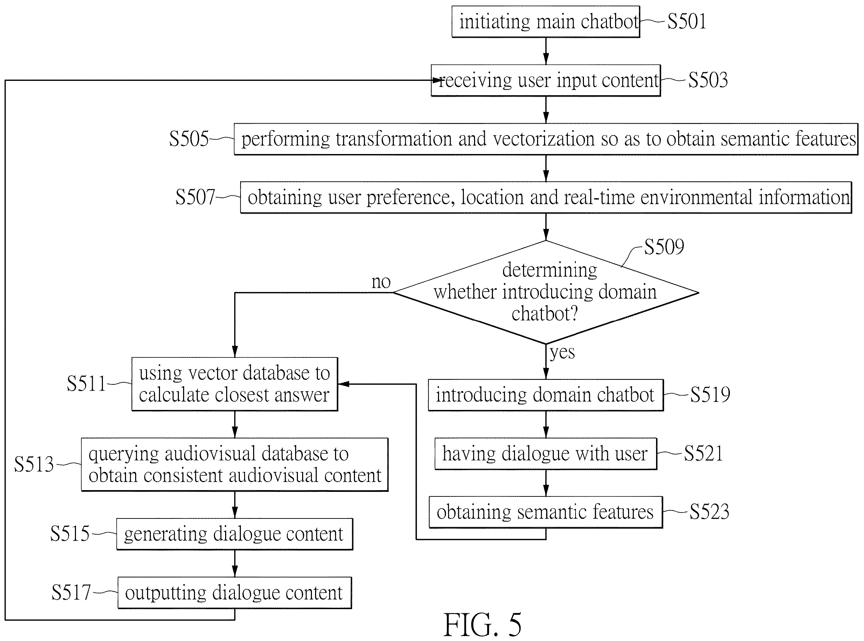

Reference is further made to Fig. 5, which is a flowchart illustrating the method for introducing the intelligent dialogue according to another embodiment of the present invention. A first chatbot or a second chatbot described in the flowchart is an automated dialogue program performed in the online dialogue procedure. The first chatbot or the second chatbot can be any of the main chatbot or the multiple domain chatbots provided by the multi-domain robot database.

In the flowchart of Fig. 5, the user uses an application program to initiate an online dialogue procedure, and the first chatbot is imported. In one of the embodiments of the present invention, a default main chatbot can be firstly imported in the online dialogue procedure (step S501). The first chatbot can automatically generate dialogue contents, or can wait for the user to input contents and receive the same (step S503), thereby acquiring the semantic features of the user. In the embodiment, the cloud server uses the natural language processing module to perform a transformer algorithm and a vector operation, so as to obtain the semantic features (step S505).

It should be noted that, according to certain embodiments of the method for introducing the intelligent dialogue provided in the present invention, an artificial intelligence technology is used to learn natural languages and conduct natural language comprehension on the natural languages for categorizing the texts and performing semantic analysis on the texts. When the user-input dialogue contents are being processed, a deep-learning method of a transformer model (issued by Google^{™} Brain in 2017) is incorporated to process the user-input natural language contents with an attribute of time sequence. If the user-input contents are not texts, the contents should be textified into texts. Thus, in the online dialogue procedure, the transformer model can be used to conduct machine translation, document summarization, and document generation.

After the semantic features of the dialogue content are obtained, the user preference and a current location of the user (or a location of interest to the user that is analyzed from the dialogue contents) are cooperatively obtained. Based on said location, real-time environmental information can be retrieved in real time from the external system (step S507). The real-time environmental information includes any or any combination of real-time weather, real-time traffic, real-time news, and network information relating to a present location (e.g., POIs shown on a map or evaluations of POIs) that are retrieved from one or more external systems in real time.

In the meantime, the system performs a software process that is used to import a chatbot. The software process links to the robot introducing interface 30 of the multi-domain robot database of Fig. 3, and determines whether or not to import the second chatbot according to any or any combination of the semantic features, the user preference, and the real-time environmental information (step S509). The second chatbot is a domain-specific chatbot that the software process imports to the online dialogue procedure according to the semantics of the user, the user preference, and the real-time environmental information.

In the above steps, when it is determined not to import the second chatbot (represented as "no"), the user still chats with the default main chatbot or any domain chatbot. Afterwards, the system uses the vector database to calculate a closest answer (step S511) based on the semantic features, the user preference, and the real-time environmental information (with or without the addition of the historical dialogue records). It is worth mentioning that the data in the vector database is structured data obtained by the vector operation, and the system can rely on the vector distances to acquire the words with similar semantics from the data in the vector database. For example, a vector distance between the word "computer" appeared in the dialogue content and the word "computation" in the vector database is closer than a vector distance between the words "computer" and "running."

Further, the system can obtain the audiovisual contents that are consistent with the interests of the user by querying the audiovisual database based on the above-mentioned information (step S513). The main chatbot or any of the domain chatbots uses the natural language processing technology to process the user-input contents and uses the generative artificial intelligence technology to generate the dialogue contents (step S515). The dialogue contents are then outputted via the dialogue interface (step S517). In one further aspect, the above steps will be repeated in the online dialogue procedure, and the chatbot can use the natural language in texts or voices to chat with the user and provide interested and instant contents (e.g., audiovisual contents or texts) for the user.

On the other hand, in step S509, when a current condition indicates that a domain chatbot in a specific domain should be introduced (represented as "yes"), the domain chatbot is introduced from the multi-domain robot database via the robot introducing interface (step S519). The domain chatbot operates a natural language model to generate dialogues, and conducts a dialogue under a specific domain with the user (step S519). Similarly, the system uses the NLP module to obtain the semantic features of the dialogues (step S523). The system proceeds with the steps of obtaining real-time environmental information and generating dialogue contents, such as in steps S511 to S517. Step S503 is repeated for relying on the semantic features, the user preference, and the real-time environmental information to generate dialogue contents and determine whether or not to introduce other domain chatbots.

Relevant application is as shown in Fig. 13, which is a schematic diagram illustrating a graphical user interface for introducing the domain chatbot according to one of the embodiments of the present invention. Taking a domain chatbot provided by a manufacturer as an example, when a topic that is directed to a service or a product provided by the manufacturer is determined according to the dialogue contents between the user and the chatbot, the domain chatbot of the manufacturer is automatically imported. At this time, a logo 1301 of the manufactuer is shown on the dialogue interface 1300, and the domain chatbot uses a natural language model to generate contents (e.g., dialogue contents 1303 and 1305) to be exchanged with the user. Further, a recommended audiovisual content can be introduced by querying an audiovisual database (e.g., the audiovisual database 110 of Fig. 1). The audiovisual content (e.g., a recommended product video 1304 as shown in the diagram) can be embedded in the dialogue interface 1300. The user can respond to the recommended product video 1304 by a dialogue content 1306.

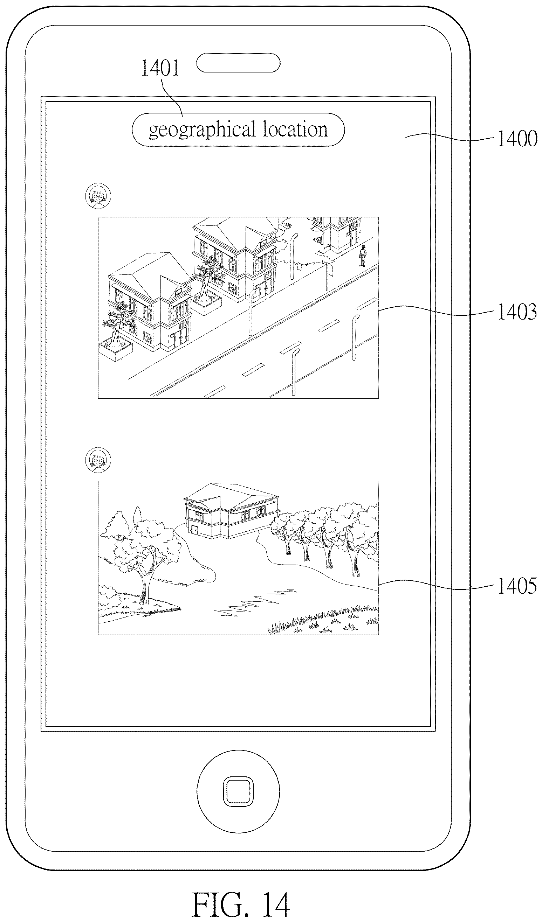

Fig. 14 is another schematic diagram depicting a graphical user interface for introducing a recommended manufacturer. A domain chatbot determines that a service or a product provided by a manufacturer meets a certain condition according to semantics of the dialogue contents inputted by the user, the user preference, and a current location of the user. One or more location-based recommended contents relevant to a geographical location 1401 of the user can be shown on a dialogue interface 1400, e.g., a first recommended manufacturer 1403 and a second recommended manufacturer 1405 associated with the geographical location 1401. Thus, the domain-specific chatbot can provide dialogue contents that are consistent with the requirement of the user in a specific domain.

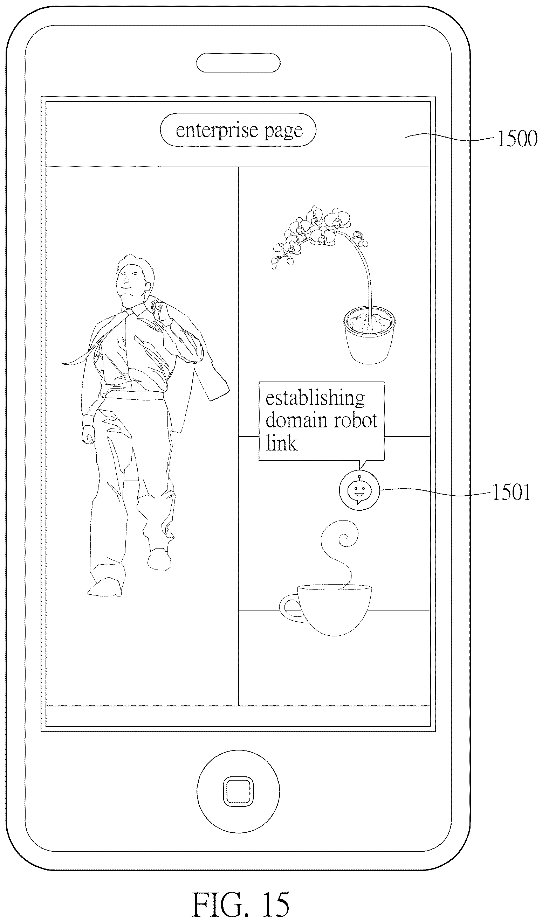

Reference is made to Fig. 15, which is a schematic diagram illustrating a graphical user interface of an enterprise page according to one embodiment of the present invention. The system allows a user to create a main page by an application executed at a user end. For example, an enterprise page 1500 shown in the diagram allows an enterprise user to create contents and provides management tools to customize a domain chatbot. For example, a link 1501 for creating the domain chatbot is shown on the enterprise page 1500.

According to certain embodiments of the present invention, the system provides the enterprise user to create a domain chatbot that meets requirements of the enterprise. A machine-learning module (e.g., the machine-learning module 103 of Fig. 1) of the cloud server of the system is used to learn the contents provided by the enterprise, so that the trained domain chatbot can use a natural language to provide the service or the product of the enterprise through the dialogue contents.

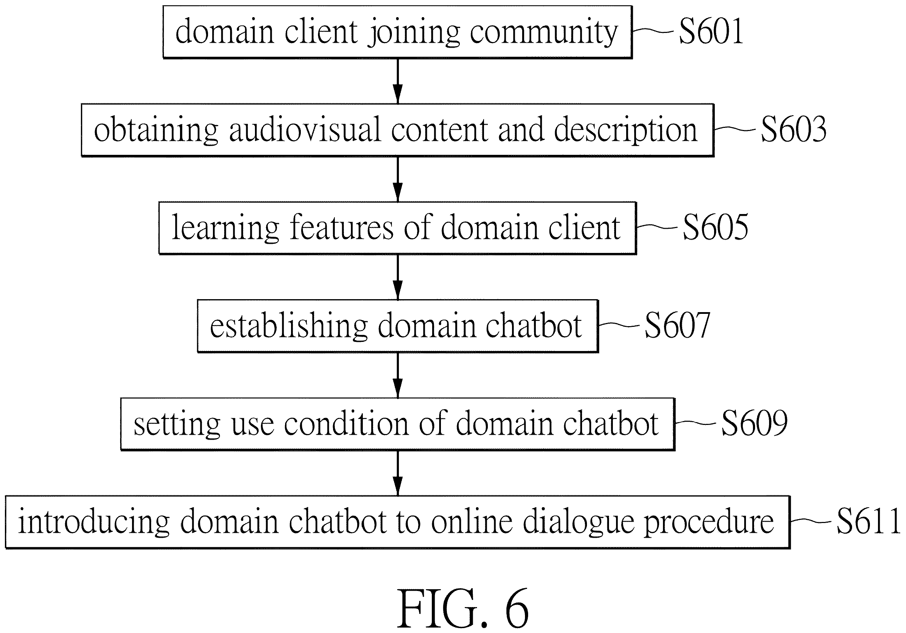

Reference is made to Fig. 6, which is a flowchart illustrating a process of creating a domain chatbot according to one embodiment of the present invention.

In the system for introducing the intelligent dialogue, the enterprise user belongs to a domain client that is required to join a specific social media (step S601) and establish the enterprise page 1500 shown in Fig. 15. The system allows the domain client to upload audiovisual contents and descriptions for creating his own main page (step S603). In the process of creating a domain chatbot proprietary to the domain client, the machine-learning algorithm provided by the system is used to learn data of various domains that is provided by the domain client. After learning features of various domains (step S605), a natural language processing technology and a generative artificial intelligence technology are used to create the domain chatbot proprietary to the domain client (step S607).

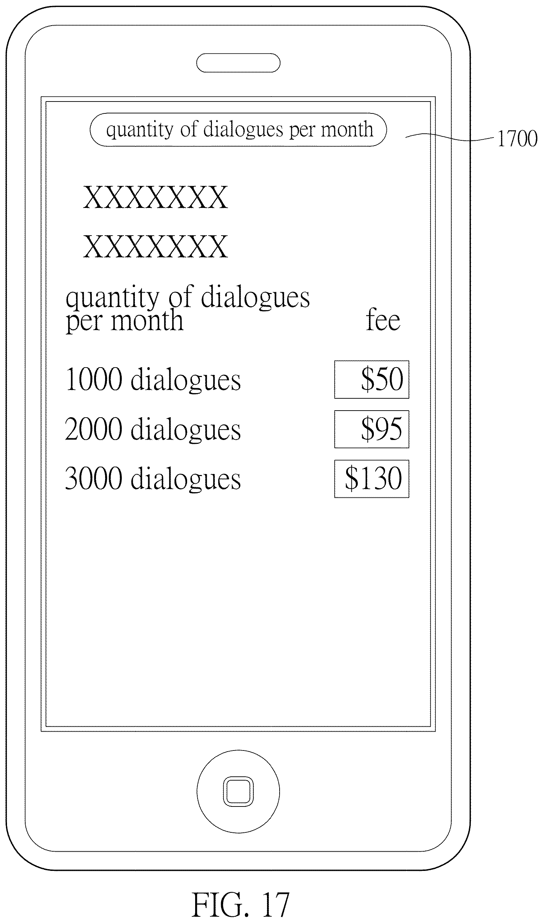

Further, for a business client, the system can provide charged services and allow the domain client to set conditions (e.g., a quantity and a budget of daily, weekly, or monthly dialogues) for using the domain chatbot (step S609). Reference is made to Fig. 17, which is a schematic diagram illustrating a graphical user interface of a page for setting budgets. As shown in the diagram, a budget setting page 1700 is shown by an enterprise user-end application. The budget setting page 1700 allows the enterprise user to set a variety of charged schemes for reference to the domain client.

When the domain client accomplishes creating his own domain chatbot and related settings, the domain chatbot proprietary to the domain client is established in the multi-domain robot database 140 provided by the cloud server 100 shown in Fig. 1. When the system performs the method for introducing the intelligent dialogue, the software process performing the method is used to analyze semantics of the user and import a corresponding domain chatbot to the online dialogue procedure based on the requirement of the user (step S611).

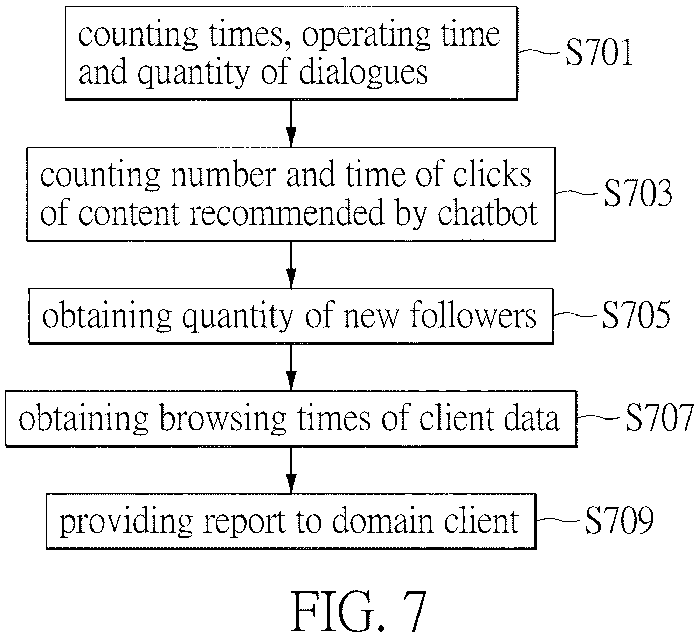

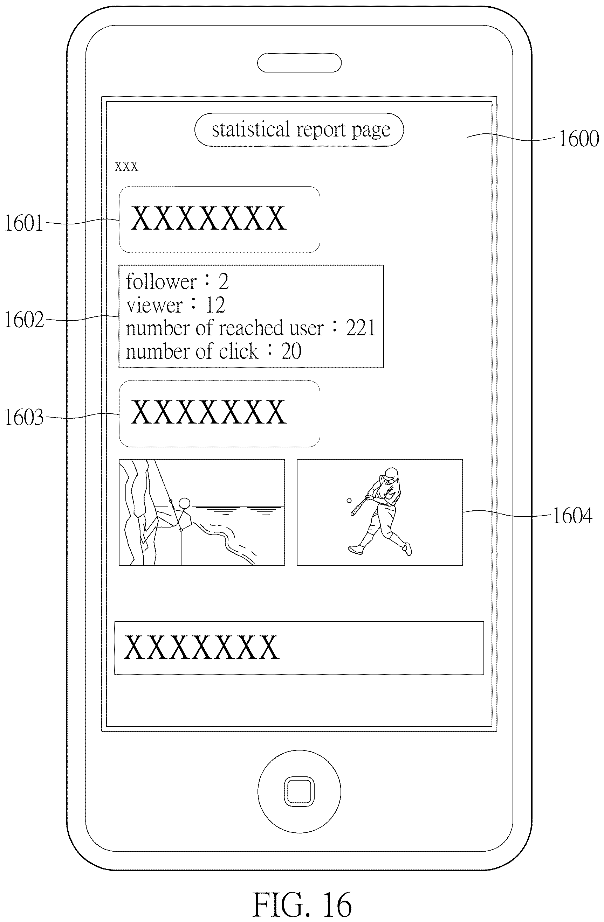

Further, when the system serves the domain client, the system provides a usage state of the domain chatbot to the domain user. Reference is made to Fig. 7, which is a flowchart illustrating a process of producing a domain client report according to one embodiment of the present invention. Reference can also be made to a graphical user interface of a statistical report page shown in Fig. 16.

When the system operates each of the domain chatbots, the system produces statistical data for each of the domain chatbots. The domain client can evaluate performance of his own domain chatbot based on the statistical data. A software process operated in the cloud server counts a number of times to import the domain chatbot, an operating time, and a quantity of dialogues (step S701). In addition, a clicking number and a clicking time of contents recommended by the domain chatbot are also counted (step S703). Further, the system also obtains a quantity of new followers (step S705) and a quantity of browsing the client data (step S707). The system provides the domain client report that includes the above data for the domain client to evaluate the performance of the domain chatbot (step S709).

Reference is made to Fig. 16, which is a schematic diagram depicting a graphical user interface of a statistical report page according to one embodiment of the present invention. A statistical report page 1600 can be provided to the domain client by chatting with a chatbot provided by the system to ask for the domain client report (e.g., through dialogue contents 1601 and 1603). The system then responds to the domain client with a statistical report 1602. It should be noted that, in addition to providing a common statistical report to the domain client, the domain client can acquire the statistical data of his own domain chatbot through dialogues in the online dialogue procedure. In the online dialogue procedure, the system can continue to provide recommended activities 1604 according to the semantics of the user, the user preference, and the real-time environmental information.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present invention pertains without departing from its spirit and scope.

## Claims

1. A method for introducing an intelligent dialogue, which is performed in a cloud server (100), **characterized in that** the method comprises:
activating an online dialogue procedure, introducing a first chatbot, and receiving a user-input content via a dialogue interface (115);
retrieving semantic features of the user-input content;
obtaining user data and real-time environmental information;
introducing a second chatbot according to information of one or any combination of the semantic features of the user-input content, a user preference obtained from the user data, and the real-time environmental information;
generating a dialogue content by a natural language model that is operated by the second chatbot; and
importing the dialogue content to the online dialogue procedure, and outputting the dialogue content on the dialogue interface (115).

2. The method according to claim 1, wherein, in addition to generating the dialogue content, the first chatbot or the second chatbot introduces one or more audiovisual contents to the dialogue interface (115) according to the semantic features, the user preference, and the real-time environmental information.

3. The method according to claim 2, wherein one or more location-based recommended contents associated with a location of a user are shown on the dialogue interface (115).

4. The method according to claim 1, wherein the cloud server (100) operates a social media, a corresponding social media application is executed in a user device (150), and a user clicks on a dialogue linking icon shown on a page of the social media application to enter the online dialogue procedure.

5. The method according to claim 1, wherein the natural language model operated in the cloud server (100) uses a transformer model to conduct machine translation, document summarization, and document generation, so as to generate the dialogue content.

6. The method according to claim 5, wherein the cloud server (100) further performs a vector operation on the user-input content, the user preference, and the real-time environmental information, annotates texts, calculates a vector for each of words, retrieves correlated contents based on vector distances between the words, and generates the dialogue content that is consistent with the user preference and the real-time environmental information.

7. The method according to any of claim 1 to claim 6, wherein the first chatbot is a default main chatbot in the online dialogue procedure, and the second chatbot is a domain chatbot to be determined by a software process operated in the cloud server (100) for introducing a chatbot based on one or any combination of the semantic features, the user preference, and the real-time environmental information.

8. A system for introducing an intelligent dialogue, **characterized by** comprising:
a cloud server (100), wherein the cloud server (100) uses a processing circuit to perform a method for introducing the intelligent dialogue, and the method includes:
activating an online dialogue procedure, introducing a first chatbot, and receiving a user-input content via a dialogue interface (115);
retrieving semantic features of the user-input content;
obtaining user data and real-time environmental information;
introducing a second chatbot according to information of one or any combination of the semantic features of the user-input content, a user preference obtained from the user data, and the real-time environmental information;
generating a dialogue content by a natural language model that is operated by the second chatbot; and
importing the dialogue content to the online dialogue procedure, and outputting the dialogue content on the dialogue interface (115).

9. The system according to claim 8, wherein the cloud server (100) provides an external system interface that is used to interface with one or more external systems for retrieving the real-time environmental information, and the real-time environmental information includes one or any combination of real-time weather, real-time traffic, real-time news, and network information relating to a present location.

10. The system according to claim 8, wherein the natural language model operated in the cloud server (100) employs a transformer model to conduct machine translation, document summarization, and document generation, so as to generate the dialogue content; wherein the cloud server (100) further performs a vector operation on the user-input content, the user preference, and the real-time environmental information, annotates texts, calculates a vector of each of words, retrieves correlated contents based on vector distances between the words, and generates the dialogue content that is consistent with the user preference and the real-time environmental information.

11. The system according to claim 8, wherein the cloud server (100) operates a social media, a corresponding social media application is executed in a user device (150), and a user clicks on a dialogue linking icon shown on a page of the social media application to enter the online dialogue procedure.

12. The system according to any of claim 8 to claim 11, wherein the first chatbot is a default main chatbot in the online dialogue procedure, and the second chatbot is a domain chatbot to be determined by a software process operated in the cloud server (100) for introducing a chatbot based on one or any combination of the semantic features, the user preference and the real-time environmental information.

13. The system according to claim 12, wherein the cloud server (100) provides a multi-domain robot database (140), and the domain chatbot is provided from the multi-domain robot database (140); wherein the multi-domain robot database (140) includes multiple domain models that are trained by learning professional knowledge in various domains through multiple machine-learning algorithms, and the multiple domain models achieve multiple domain chatbots capable of processing natural languages by a natural language processing technology and a generative artificial intelligence technology.

14. The system according to claim 12, wherein the cloud server (100) counts a quantity of introducing the domain chatbot, an operating time, a quantity of dialogues, and a clicking number and a clicking time of a content recommended by the domain chatbot, so as to provide a domain client report.

15. The system according to claim 12 wherein the cloud server (100) provides an audiovisual database, and the domain chatbot queries the audiovisual database according to the semantic features, the user preference, and the real-time environmental information, so as to introduce one or more audiovisual contents to the dialogue interface (115).
